# EUROPÄISCHE PATENTSCHRIFT

(11) **EP 0 662 794 B1**
(45) Veröffentlichungstag und Bekanntmachung des Hinweises auf die Patenterteilung: **28.05.1997**
(21) Anmeldenummer: 93920707.2
(22) Anmeldetag: 13.09.1993
(51) Int. Cl.: A46B 13/00, B64F 5/00

(54) **BÜRSTENKOPF FÜR GROSSMANIPULATOREN**
BRUSH HEAD FOR LARGE MANIPULATORS
TETE DE BROSSE POUR GRANDS MANIPULATEURS

(30) Priorität: 02.10.1992 DE 4233161
(43) Veröffentlichungstag der Anmeldung: 19.07.1995
(73) Patentinhaber: PUTZMEISTER-WERK MASCHINENFABRIK GMBH, 72631 Aichtal (DE)
(72) Erfinder: WANNER, Martin, D-70599 Stuttgart (DE); MAIER, Dieter, D-72124 Pliezhausen (DE); BIRK, Gerhard, D-70178 Stuttgart (DE)
(74) Vertreter: Wolf, Eckhard, Dr.-Ing.
(86) Internationale Anmeldenummer: EP9302468
(87) Internationale Veröffentlichungsnummer: WO9407390

(56) Entgegenhaltungen:
- DE-A- 4 035 519
- DE-U- 9 205 184
- US-A- 4 724 565

## Beschreibung

Die Erfindung betrifft einen Bürstenkopf für Großmanipulatoren mit einem an einem Ausleger und/oder Multigelenk des Großmanipulators ankoppelbaren Träger mit einer am Träger auf einer motorisch in vorgegebener Drehrichtung angetriebenen Bürstenwelle angeordneten, fliehkraftgetragene biegeschlaffe Borsten aufweisenden, mit ihren Borsten gegen eine zu reinigende Oberfläche einwirkenden, in mindestens zwei axial voneinander getrennte Walzensektionen unterteilten Bürstenwalze und mit jeweils mindestens einem zwischen der Bürstenwelle und den einzelnen Walzensektionen angeordneten Drehmomentaufnehmer, wobei die Bürstenwelle in eine der Anzahl der Walzensektionen entsprechende Anzahl Wellensektionen unterteilt ist und die aus Wellensektion und Walzensektion gebildeten Bürstensektionen im Bereich der Wellensektionen axial gegeneinander verspannt und mit dem trägerseitigen Motorantrieb verbunden sind, und wobei die Drehmomentaufnehmer eine radial über die jeweilige Wellensektion in Richtung Walzensektion überstehende Wägezelle aufweisen.

In der DE-A1 40 35 519 ist bereits vorgeschlagen worden, einen Großmanipulator mit einer fernsteuerbaren Waschbürste auszustatten. Der bekannte Großmanipulator weist einen aus mehreren an ihren Enden gegeneinander verschwenkbaren Auslegern zusammengesetzten Knickmast auf, dessen Grundausleger an einem auf einem Fahrgestell angeordneten Lagerbock um eine vertikale Achse drehbar gelagert ist und dessen Endausleger ein mit dem Bürstenkopf bestückbares Multigelenk aufweist. Das Multigelenk ist dort in drei rotatorischen Freiheitsgraden betätigbar und weist zusätzlich einen durch eine Teleskopachse gebildeten translatorischen Freiheitsgrad auf. Der Bürstenkopf enthält zwei motorisch angetriebene, in rotierendem Zustand eine kegelstumpfförmige Mantelfläche aufweisende, an ihrem einen größeren Durchmesser aufweisenden stirnseitigen Enden einander zugewandte Bürstenwalzen, die unter Einschluß eines variablen Winkels zwischen ihren Rotationsachsen gegeneinander verstellbar am Träger angeordnet sind. Aus dieser Druckschrift ist es auch bekannt, die Bürstenwalzen und deren Tragkörper aus drei axial voneinander getrennten, über voneinander unabhängige Drehmomentaufnehmer auf der Bürstenwelle gelagerten Walzensektionen zusammenzusetzen, die eine regelbare Ausrichtung der Bürstenwalze gegenüber einer zu bearbeitenden Oberfläche nach Maßgabe der Differenz der zwischen den äußeren Walzensektionen beim Reinigungsvorgang gemessenen Drehmomente ermöglichen. In der Praxis hat es sich jedoch gezeigt, daß viele Reinigungsaufgaben, beispielsweise beim Waschen von Flugzeugen, mit einem doppelwalzigen Bürstenkopf vor allem wegen fehlender Bewegungsfreiheitsgrade nicht gelöst werden können. Abgesehen davon hat es sich als recht schwierig erwiesen, einen zuverlässig funktionierenden Drehmomentaufnehmer in den bekannten Bürstenwalzen zu realisieren.

Weiter ist es bei einem Bürstenkopf der eingangs angegebenen Art bekannt (DE-U-92 05 184), daß die Bürstenwelle in eine der Anzahl der Walzensektionen entsprechende Anzahl Wellensektionen unterteilt ist und daß die Drehmomentaufnehmer eine radial über die jeweilige Wellensektion in Richtung Walzensektion überstehende Wägezelle aufweisen. Die Walzensektionen sind dort mittels einer Reihe von radialen Dornen, die sich quer durch radiale Bohrungen des Trägers und der Walzensegmentabschnitte erstrecken, miteinander verbunden. Jedem Mitnehmerdorn ist ein Transduktor zugeordnet, der den Widerstand gegen die Drehbewegung der Walzensegmente erfassen und in elektische Signale umsetzen soll. An der motorisch angetriebenen Bürstenwalze des Bürstenkopfes greifen beim Waschvorgang aber nicht nur Kräfte in Umfangsrichtung, sondern auch solche in axialer und radialer Richtung an, die zu einer Verfälschung der an der Wägezelle abgegriffenen Meßsignale führen können.

Ausgehend hiervon liegt der Erfindung die Aufgabe zugrunde, einen Bürstenkopf für Großmanipulatoren der eingangs angegebenen Art zu entwickeln, mit dem im Betriebszustand eine zuverlässige Drehmomentaufnahme für eine automatische Führung des Bürstenkopfes auf der zu reinigenden Oberfläche möglich ist.

Zur Lösung dieser Aufgabe wird gemäß der Erfindung vorgeschlagen,
- daß die einander zugeordneten, zueinander konzentrischen Walzen- und Wellensektionen durch über den Umfang verteilt angeordnete, in axialer und radialer Richtung steife und in Umfangsrichtung nachgiebige radiale Abstandshalter miteinander verbunden sind,
- und daß die Drehmomentaufnehmer ein sich zwischen der Wägezelle und der Innenseite der zugehörigen Walzensektion im wesentlichen tangential entgegen der Drehrichtung erstreckendes Zugglied aufweisen.

Die Wägezellen enthalten zweckmäßig einen Dehnungsmeßstreifen, der ein von der angelegten Kraft abhängiges Meßsignal abgibt. Jeder Wägezelle ist daher ein vorzugsweise im Inneren der hohl ausgebildeten Wellensektion angeordneter, mit einer externen Auswerteelektronik verbundener Meßwertumformer zugeordnet, wobei die Meßleitungen über einen Schleifring nach außen geführt werden können. Die Krafteinleitung in die Wägezelle ist so orientiert und gestaltet, daß in die Wägezelle nur Zugkräfte entgegen der Drehrichtung der Waschbürste eingeleitet werden. Die über das Zugglied an der Wägezelle angreifenden Zugkräfte und die durch diese ausgelösten Meßsignale sind annähernd proportional zur Eintauchtiefe der Borsten, so daß eine regelungstechnische Auswertung der Meßsignale für die Positionierung und Orientierung der Waschbürste möglich ist.

Aus Gründen der Redundanz können in den Bürstenringen jeweils zwei einander diametral gegenüberliegende (oder auch mehr als zwei) Wägezellen vorgesehen werden, die - solange sie beide gemeinsam funktionieren - es ermöglichen, die Plausibilität der Meßergebnisse zu überprüfen, und die beim Ausfall einer Wägezelle einen Notbetrieb bis zum nächsten Wartungsintervall gewährleisten. Die Funktion der Wägezellen wird über einen Bordrechner überwacht. Die Wägezellen befinden sich in einer feuchten und chemisch-aggresiven Umgebung (Waschflüssigkeit mit Zusätzen) und weisen daher ein hermetisch abgeschlossenes Gehäuse auf.

Eine weitere vorteilhafte Ausgestaltung der Erfindung sieht vor, daß die Wellen- und Walzensektionen einander radial zugewandte, axial ausgerichtete Schraubleisten zur Befestigung der aus Flachmaterial, insbesondere aus biegsamem Metallblech, bestehenden Abstandshalter aufweisen. Die Bürstenringe sind zweckmäßig über eine durch die hohl ausgebildeten Wellensektionen hindurchgreifende Zugstange miteinander und mit dem trägerseitigen Motorantrieb verbunden. Weiter ist die Bürstenwelle vorteilhafterweise einseitig in einem trägerseitigen Drehlager gelagert, während die Zugstange vorzugsweise über eine Kardanwelle mit dem Motorantrieb verbunden ist, wobei der Schleifring für die Meßleitungen zweckmäßig auf der Kardanwelle angeordnet werden kann.

Um im Störfalle eine einfache Wartung zu gewährleisten, sind alle Meßwertumformer auf einer durch die hohl ausgebildeten Walzensektionen hindurchgreifenden und dort lösbar befestigten, vorzugsweise die Zugstange rohrartig umfassenden Tragstruktur angeordnet.

Weiter hat es sich als sehr wichtig erwiesen, wenn zwischen den einzelnen Walzensektionen kein oder nur ein geringer Kraftschluß besteht. Sie werden über Zwischenringe im Bereich der Wellensektionen auf Distanz gehalten und können relativ zueinander in Umfangsrichtung verdreht werden. Da die Waschbürsten mit Drehzahlen von etwa 150 Umdrehungen pro Minute umlaufen, können bei den großen Durchmessern relativ große Unwuchten auftreten. Diese Unwuchten können näherungsweise dadurch kompensiert werden, daß die verschiedenen Sektionen durch gegenseitiges Verdrehen mit ihren eigenen Unwuchten kompensiert werden und somit keine Reaktionskraft auf den Manipulatorarm ausüben.

Die Zuführung der Waschflüssigkeit erfolgt zweckmäßig über an den Wellensektionen entlanggeführte Flüssigkeitsleitungen, an denen radial zu den Walzensektionen und zu den Bürstenfäden gerichtete Sprühleitungen abgezweigt sind und die zwischen den einzelnen Wellensektionen durch biegsame Schläuche miteinander verbunden sind, um den erwähnten Kraftschluß zwischen den Wellensektionen auszuschließen.

Die Meßsignale der Drehmomentaufnehmer müssen für die Rechnersteuerung so aufbereitet werden, daß sie frei von Störungen sind. Störungen können dabei z.B. induziert werden durch den vorzugsweise als Hydromotor ausgebildeten Antriebsmotor sowie durch Unwuchten, bedingt durch eine ungleichmäßige Abnutzung der Borsten oder durch mechanische Deformationen innerhalb der Bürstenwalze. Um den Einfluß dieser Störungen zu eliminieren, wird gemäß der Erfindung vorgeschlagen, daß die Meßsignale durch einen auf die Vorschubgeschwindigkeit des Bürstenkopfes abgestimmten Tiefpaßfilter aufbereitet werden. Die aus Unwuchten des Bürstenkopfes und Abnützungserscheinungen resultierenden Frequenzen liegen in der Größenordnung von etwa 2,5 Hz entsprechend der Drehzahl des Bürstenkopfes, während die Störungen aus dem Motorbereich bei etwa 80 Hz liegen. Erfindungsgemäß wird daher vorgeschlagen, den Tiefpaßfilter mit einer Grenzfrequenz von 1,5 bis 3 Hz auszulegen.

Mit der erfindungsgemäßen Unterteilung der Bürstenwalze in mehrere Sektionen wird erreicht, daß durch Messen der unterschiedlichen Eintauchtiefe (Drehmoment- oder Torsionsmessung) die Adaptionsachsen des Bürstenkopfes hinsichtlich ihrer Position und Orientierung nachgeführt werden können. Grundsätzlich würden hierzu zwei Sektionen genügen. Aus Redundanzgründen werden jedoch mindestens drei, vorzugsweise vier Walzensektionen vorgesehen.

Um Beschädigungen der zu reinigenden Oberfläche zu vermeiden, muß in kritischen Situationen eine Notabschaltung möglich sein. Insbesondere muß gewährleistet werden, daß bei einer vorgegebenen Eindringtiefe eine Abschaltung so erfolgt, daß auch noch ein Nachlauf des Bürstenkopfes in radialer Richtung abgefangen werden kann. Um dies zu erreichen, weisen die Walzensektionen jeweils mindestens einen innerhalb der Borstenanordnung vertieft angeordneten Berührungssensor zur Auslösung eines Not-Aus-Signals auf. Der Berührungssensor kann dabei einen in einer Radialführung innerhalb der Bürstenwalze angeordneten, mit einem Büschel aus elastischen Tastborsten bestehenden Tastborstenträger und ein durch eine Radialbewegung des Tastborstenträgers betätigbares Schaltorgan aufweisen, wobei die Tastborsten kürzer als, vorzugsweise etwa halb so lang wie die biegeschlaffen Borsten der Bürstenwalze sind. Im Betriebszustand wird der Tastborstenträger aufgrund der Zentrifugalkraft nach außen gezogen. Das Schaltorgan spricht nur an, wenn der Tastborstenträger unter Überwindung der Zentrifugalkraft radial nach innen gedrückt wird. Dies ist dann der Fall, wenn von außen her beim Eindringen in die Bürstenwalze eine Radialkraft auf die Tastborsten und damit auf den Tastborstenträger ausgeübt wird. Vorteilhafterweise sind jeweils mindestens drei, vorzugsweise vier, über den Umfang verteilt angeordnete, segmentartig ausgebildete, sich zu einem Ring ergänzende Tastborstenträger vorgesehen. Die Mehrzahl der vorhandenen Tastborstenträger hat einmal eine Redundanzfunktion. Zum anderen wird damit eine radiale und eine axiale Auflösung bei der Störungserkennung erzielt.

Im folgenden wird die Erfindung anhand eines in der Zeichnung in schematischer Weise dargestellten Ausführungsbeispiels näher erläutert. Es zeigen:
- Fig. 1: eine Seitenansicht eines fahrbaren Großmanipulators mit sechsachsigem Multigelenk und Bürstenkopf in eingeklappter Stellung;
- Fig. 2: eine Seitenansicht des Multigelenks mit Bürstenkopf in zwei Arbeitsstellungen;

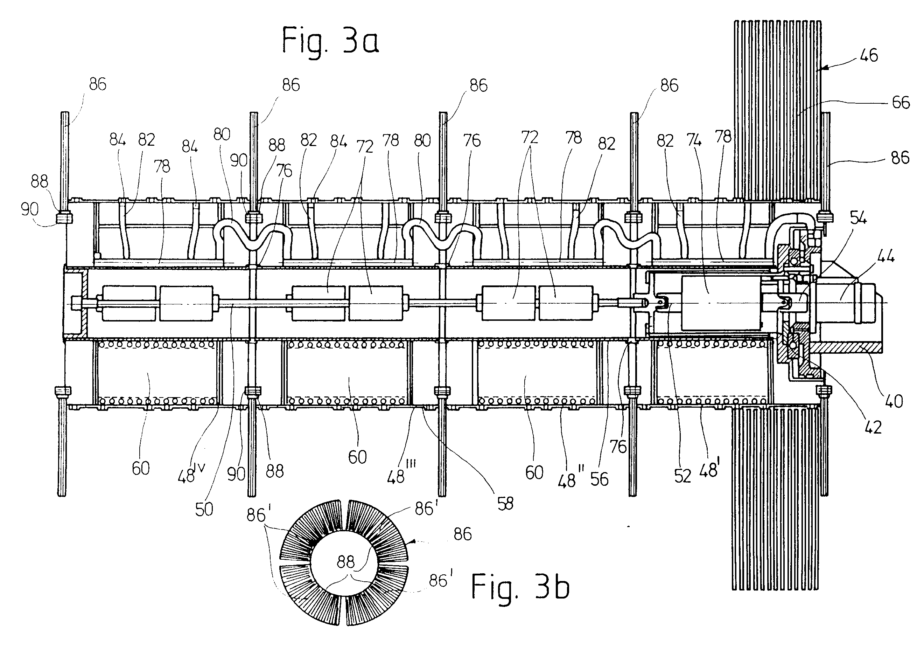

- Fig. 3a: einen Schnitt durch einen Bürstenkopf in vergrößerter Darstellung;
- Fig. 3b: eine Draufsicht auf einen Tastborstenring des Bürstenkopfs nach Fig. 3a;

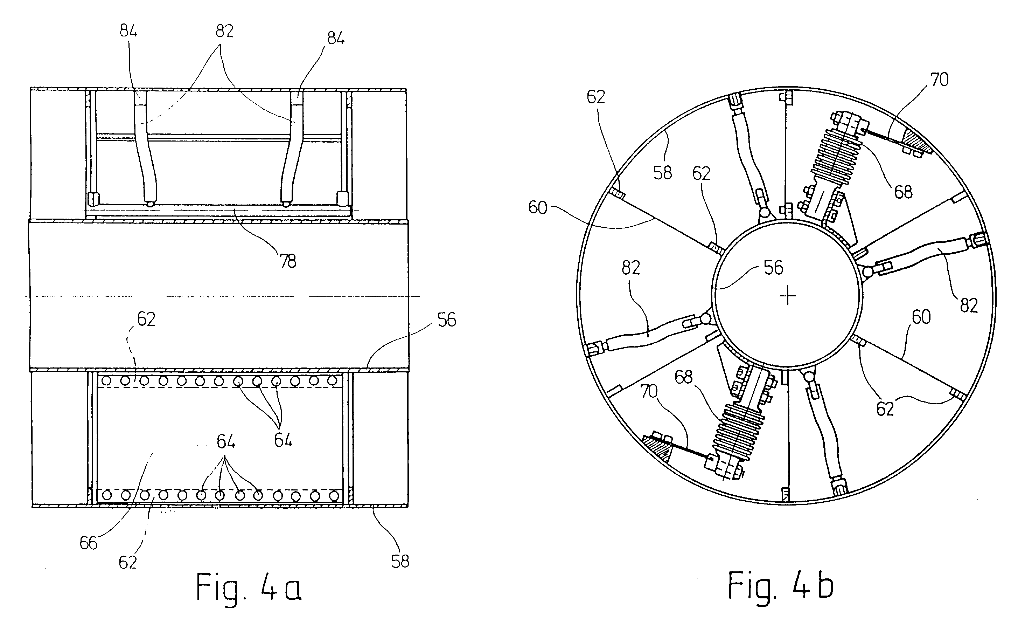

- Fig. 4a: einen Längsschnitt durch eine Walzensektion;
- Fig. 4b: eine Stirnseitenansicht einer Walzensektion.

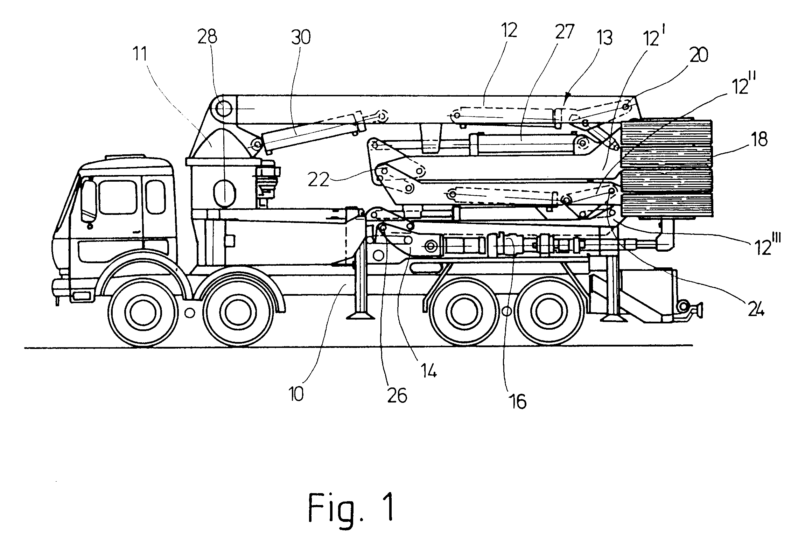

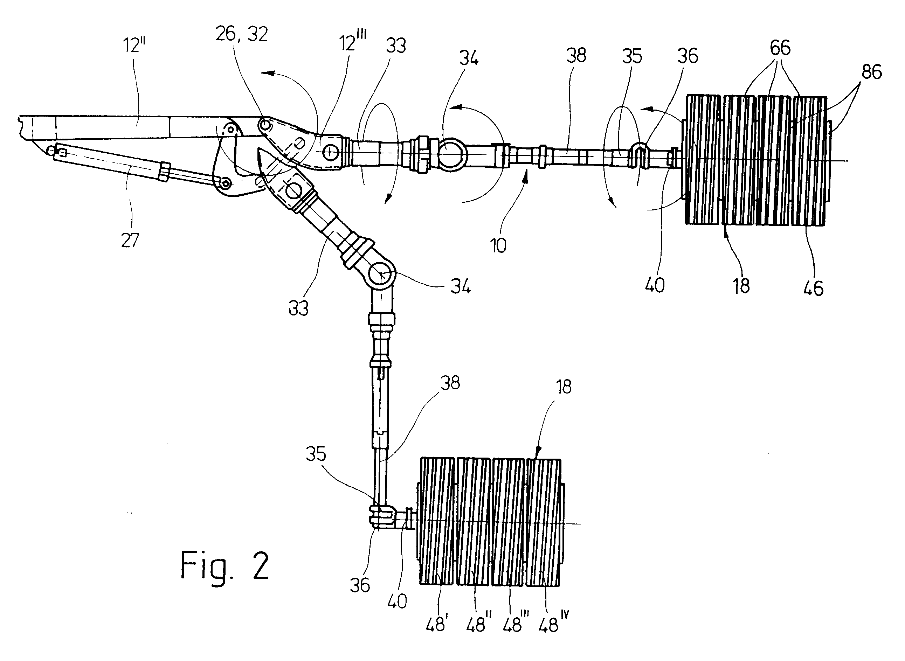

Der in Fig. 1 dargestellte mobile Großmanipulator besteht im wesentlichen aus einem auf einem Drehlagerbock 11 eines motorgetriebenen Fahrgestells 10 mit seinem Grundausleger 12 um eine vertikale Achse drehbar gelagerten Knickmast 13, einem am Endausleger 14 des Knickmasts 13 angeordneten Multigelenk 16 und einem an freien Ende des Multigelenks lösbar befestigten Bürstenkopf 18. Die fünf Ausleger 12, 12', 12'', 12''' und 14 des Knickmasts 13 sind an ihren einander zugewandten Enden an Gelenken 20, 22, 24, 26 um horizontale Achsen begrenzt verschwenkbar miteinander verbunden. Das Verschwenken erfolgt mittels Hydrozylindern 27, die an geeigneten Stellen zwischen den Auslegern angeordnet sind. Der Grundausleger 12 ist an einem horizontalen Lager 28 mittels eines Hydroantriebs 30 schwenkbar am Drehlagerbock 11 gelagert. In der in Fig. 1 gezeigten Stellung sind die Ausleger des Knickmasts in ihrem zu Transportzwecken zusammengefalteten Zustand dargestellt. Diese Anordnung ermöglicht es, mit dem Bürstenkopf beliebige Oberflächenkonturen innerhalb der von den Auslegern aufgespannten Ebene abzufahren. Mit Hilfe des motorisch verstellbaren Multigelenks 16 ist es zudem möglich, den Bürstenkopf 18 um mehrere Dreh- und Schubachsen gegenüber dem Endausleger in sechs Freiheitsgraden zu bewegen. Wie aus Fig. 2 zu ersehen ist, besteht das Multigelenk 16 im wesentlichen aus fünf Drehgelenken 32, 33, 34, 35, 36, mit jeweils einem innerhalb des Drehgelenks angeordneten, nicht dargestellten Verstellantrieb, sowie aus einem bürstenkopfseitig angeordneten hydraulisch verstellbaren Schubgelenk 38. Die Achsen 33, 34, 35 haben dabei die Aufgabe, die Waschbürste zu orientieren im Sinne von "Rollen", "Nicken" und "Gieren", während mit der Teleskopachse 38 und der Drehachse 36 die Waschbürste geregelt in konstantem Abstand entlang der zu reinigenden Oberfläche geführt wird, und zwar unter Verwendung der unten erläuterten Drehmomentsignale.

Der Bürstenkopf 18 weist einen am Drehgelenk 36 des Multigelenks 16 lösbar befestigten Träger 40 auf, der über ein Drehlager 42 mit einer über einen Hydromotor 44 angetriebenen Waschbürste 46 verbunden ist. Die Waschbürste 46 besteht ihrerseits aus vier Bürstensektionen 48', 48'', 48''', 48^{IV}, die durch eine Zugstange 50 miteinander und über eine Kardanwelle 52 mit der Abtriebswelle 54 des Hydromotors 44 verbunden sind. Die Bürstensektionen sind aus je einer inneren, hohlzylindrischen Wellensektion 56, und einer zu dieser konzentrisch angeordneten äußeren Walzensektion 58 zusammengesetzt, die durch mehrere im Winkelabstand voneinander angeordnete, radial und axial ausgedehnte dünnwandige Abstandshalter 60 aus Metallblech miteinander verbunden sind. Die Abstandshalter 60 sind an einander radial zugewandten Stegleisten 62 der Wellensektionen 56 und der Walzensektionen 58 mittels Schraubenreihen 64 befestigt. Die dünnwandigen Abstandshalter 60 bilden in axialer und radialer Richtung eine extrem steife und in Umfangsrichtung eine weiche Verbindung zwischen den Walzen- und Wellensektionen. Dadurch sind die Walzen- und Wellensektionen in Umfangsrichtung gegeneinander definiert tordierbar. Auf der Außenseite der Walzensektionen 56 ist jeweils ein sich über die Gesamtlänge erstreckender Bürstenkranz 66 aus biegeschlaffen Borsten angeordnet, die bei drehender Waschbürste unter der Einwirkung der Zentrifugalkraft radial nach außen weisen. Am Umfang der Wellensektionen 56 sind zwei einander diametral gegenüberliegende Wägezellen 68 starr angeordnet, die über ein entgegen der Drehrichtung der Waschbürste ausgerichtetes, biegeschlaffes Zugglied 70 im wesentlichen tangential mit der zugehörigen Walzensektion verbunden sind. Die Wägezellen enthalten einen nicht dargestellten Dehnmeßstreifen, der unter der Einwirkung einer am Zugglied angreifenden Kraft ein kraftproportionales Meßsignal abgibt. Die im Millivoltbereich liegenden Meßsignale werden in Meßumformern 72, die im Inneren der Wellensektionen 56 angeordnet sind, verstärkt und in dieser Form über Schleifkontakte 74 an eine externe Auswerteelektionik weitergeleitet. Die durch Zugstangen miteinander verbundenen Bürstensektionen 48', 48'', 48''', 48^{IV} stützen sich mit ihren Wellensektionen 56 an Zwischenringen so gegenseitig ab, daß sie beispielsweise zum Ausgleich von Unwuchten gegenseitig verdreht werden können. Die Wellensektionen 56 bilden somit eine durchgehende Bürstenwelle, während die Walzensektionen 58 mit ihren Bürstenkränzen sich zu einer Bürstenwalze ergänzen.

Die Verteilung der Waschflüssigkeit erfolgt über Flüssigkeitsleitungen 78, die sich achsparallel entlang den Wellensektionen 58 erstrecken und die über flexible Schlauchstücke 80 paarweise miteinander über die Wellensektionen 56 hinweg miteinander und mit einer äußeren Zuführleitung verbunden sind. Von den Flüssigkeitsleitungen 78 zweigen außerdem radiale Sprühleitungen 82 ab, die über Sprühdüsen 84 in den Bürstenkranz 66 münden und diesen von innen her mit Waschflüssigkeit versorgen.

An den stirnseitigen Enden der Waschbürste 46 und im Trennbereich zwischen zwei Walzensektion 58 ist jeweils ein Tastborstenring 86 angeordnet, der in vier als Berührungssensor ausgebildete Segmente 86' unterteilt ist. Die Tastborsten sind kürzer als die Borsten des Bürstenkranzes 66. Sie sind segmentweise mit einem Tastborstenträger 88 verbunden, der in einer Radialführung 90 im Bereich der Bürstenwalze 58 geführt ist. Die Tastborstenträger 88 werden unter der Einwirkung der Zentrifugalkraft der drehenden Waschbürste 46 zusammen mit ihren Tastborsten in der Radialführung 90 nach außen gezogen und können unter der Einwirkung einer von außen auf die Tastborsten wirkenden Radialkraft unter Überwindung der Zentrifugalkraft segmentweise gegen ein nicht dargestelltes Schaltorgan zur Auslösung eines Not-Aus-Signals verschoben werden.

Zusammenfassend ist folgendes festzustellen:

Die Erfindung bezieht sich auf einen Bürstenkopf für Großmanipulatoren, mit einer auf einer motorisch angetriebenen Bürstenwelle 56 angeordneten, fliehkraftgetragene biegeschlaffe Borsten 66 aufweisenden, mit mindestens zwei axial voneinander getrennte Walzensektion 58 unterteilten Bürstenwalze und mit jeweils mindestens einem zwischen der Bürstenwelle 56 und den einzelnen Walzensektionen 58 angeordneten Drehmomentaufnehmer. Um zur automatischen Positionierung und Orientierung des Bürstenkopfes eine zuverlässige Drehmomentaufnahme zu gewährleisten, wird gemäß der Erfindung vorgeschlagen, daß auch die Bürstenwelle in eine der Anzahl der Walzensektionen 58 entsprechende Anzahl Wellensektionen 56 unterteilt ist, daß die einander zugeordneten Walzen- und Wellensektionen durch in axialer und radialer Richtung steife und in Umfangsrichtung nachgiebige radiale Abstandshalter 60 miteinander verbunden sind, daß die Drehmomentaufnehmer eine radial über die jeweilige Wellensektion 56 in Richtung Walzensektion überstehende Wägezelle 68 und ein sich zwischen Wägezelle und Innenseite der zugehörigen Walzensektion 58 im wesentlichen tangential entgegen der Drehrichtung erstreckendes biegeschlaffes Zugglied 70 aufweisen, und daß die aus Wellensektion 56 und Walzensektion 58 zusammengesetzten Bürstensektionen 48'. 48'', 48''', 48^{IV} unter Bildung der Waschbürste 46 über eine Zugstange axial gegeneinander verspannt und mit dem stirnträgerseitigen Motorantrieb verbunden sind.

## Patentansprüche

1. Bürstenkopf für Großmanipulatoren mit einem an einem Ausleger und/oder einem Multigelenk (16) des Großmanipulators angekoppelten Träger (40), mit einer am Träger (40) auf einer motorisch in vorgegebener Drehrichtung angetriebenen Bürstenwelle (56) angeordneten, fliehkraftgetragene biegeschlaffe Borsten (66) aufweisenden, mit ihren Borsten gegen eine zu reinigende Oberfläche einwirkenden, in mindestens zwei axial getrennte Walzensektionen (58) unterteilten Bürstenwalze und mit jeweils mindestens einem zwischen der Bürstenwelle (56) und den einzelnen Walzensektionen (58) angeordneten Drehmomentnaufnehmer (68, 70), wobei die Bürstenwelle in eine der Anzahl der Walzensektionen (58) entsprechende Anzahl Wellensektionen (56) unterteilt ist, und die aus Wellensektion (56) und Walzensektion (58) gebildeten Bürstensektionen (48', 48'', 38''', 38^{IV}) im Bereich der Wellensektionen (56) axial gegeneinander verspannt und mit dem trägerseitigen Motorantrieb (44) verbunden sind und wobei die Drehmomentaufnehmer eine radial über die jeweilige Wellensektion (56) in Richtung Walzensektion (58) überstehende Wägezelle (68) aufweisen, **dadurch gekennzeichnet**, daß die einander zugeordneten, zueinander konzentrischen Walzen- und Wellensektionen (58, 56) durch über den Umfang verteilt angeordnete, in axialer und radialer Richtung steife und in Umfangsrichtung nachgiebige radiale Abstandshalter (60) miteinander verbunden sind, und daß die Drehmomentaufnehmer ein sich zwischen Wägezelle (68) und Innenseite der zugehörigen Walzensektion (58) im wesentlichen tangential entgegen der Drehrichtung erstreckendes Zugglied (70) aufweisen.

2. Bürstenkopf nach Anspruch 1, dadurch gekennzeichnet, daß in den Bürstensektionen (56, 58) jeweils zwei einander diametral gegenüberliegende Wägezellen (68) angeordnet sind.

3. Bürstenkopf nach Anspruch 1 oder 2, dadurch gekennzeichnet, daß die an den Wägezellen (68) angreifenden Zugglieder (70) biegeschlaff sind.

4. Bürstenkopf nach einem der Ansprüche 1 bis 3, dadurch gekennzeichnet, daß die Wägezellen (68) einen Dehnungsmeßstreifen enthalten.

5. Bürstenkopf nach einem der Ansprüche 1 bis 4, dadurch gekennzeichnet, daß die Wellensektionen (56) und die Walzensektionen (58) einander radial Zugewandte, axial ausgerichtete Stegleisten (62) zur Befestigung der aus Flachmaterial, insbesondere Metallblech, bestehenden Abstandshalter (60) aufweisen.

6. Bürstenkopf nach einem der Ansprüche 1 bis 5, dadurch gekennzeichnet, daß jeder Wägezelle (68) ein vorzugsweise im Inneren der hohl ausgebildeten Wellensektion (56) angeordneter, mit einer externen Auswerteelektronik verbundener Signalumformer (72) zugeordnet ist.

7. Bürstenkopf nach einem der Ansprüche 1 bis 6, dadurch gekennzeichnet, daß die Bürstensektionen (56, 58) über eine durch die hohl ausgebildete Wellensektion (56) hindurchgreifende Zugstange (50) miteinander und mit dem trägerseitigen Motorantrieb (44, 54) verbunden sind.

8. Bürstenkopf nach Anspruch 7, dadurch gekennzeichnet, daß die motorseitige Wellensektion (56) einseitig in einem trägerseitigen Drehlager (42) gelagert ist und daß die Zugstange (50), vorzugsweise über eine Kardanwelle (52), mit dem Motorantrieb (44, 54) verbunden ist.

9. Bürstenkopf nach Anspruch 8, dadurch gekennzeichnet, daß auf der Kardanwelle (52) ein Schleifring (74) für die zu den Signalumformern (72) führenden Meßleitungen angeordnet ist.

10. Bürstenkopf nach einem der Ansprüche 1 bis 9, dadurch gekennzeichnet, daß alle Signalumformer (72) auf einer durch die hohl ausgebildeten Wellensektionen (56) hindurchgreifenden und dort lösbar befestigten, vorzugsweise als die Zugstange (50) umfassendes Rohr ausgebildeten Tragstruktur angeordnet sind.

11. Bürstenkopf nach einem der Ansprüche 1 bis 10, dadurch gekennzeichnet, daß die Wellensektionen (56) durch axiale Zwischenringe (76) in Umfangsrichtung gegeneinander verdrehbar miteinander verbunden sind.

12. Bürstenkopf nach einem der Ansprüche 1 bis 11, gekennzeichnet durch an den Wellensektionen (56) entlanggeführte Flüssigkeitsleitungen (78) für Waschflüssigkeit, an denen radial zu den Walzensektionen (58) gerichtete Sprühleitungen abgezweigt sind und die zwischen den Wellensektionen (56) durch biegsame Schlauchstücke (80) miteinander verbunden sind.

13. Bürstenkopf nach einem der Ansprüche 1 bis 12, dadurch gekennzeichnet, daß mindestens drei, vorzugsweise vier im Bereich der Wellensektionen (56) miteinander verbundene Bürstensektionen (48', 48'', 48''', 48^{IV}) vorgesehen sind.

14. Bürstenkopf nach einem der Ansprüche 1 bis 13, dadurch gekennzeichnet, daß die Walzensektionen (58) jeweils mindestens einen in ihrem Bürstenkranz (66) vertieft angeordneten Berührungssensor (86, 88) zur Auslösung eines Not-Aus-Signals aufweisen.

15. Bürstenkopf nach Anspruch 14, dadurch gekennzeichnet, daß der Berührungssensor einen in einer Radialführung (90) im Bereich der Walzensektionen (58) angeordneten, mit einem Büschel aus steifelastischen Tastborsten bestückten Tastborstenträger (88) und ein durch eine Radialbewegung des Tastborstenträgers (88) betätigbares Schaltorgan aufweist, wobei die Tastborsten kürzer als, vorzugsweise etwa halb so lang wie die biegeschlaffen Borsten des Bürstenkranzes (66) sind.

16. Bürstenkopf nach Anspruch 15, dadurch gekennzeichnet, daß jeweils mindestens drei, vorzugsweise vier über den Umfang verteilt angeordnete, segmentartig ausgebildete, sich zu einem Ring (86) ergänzende Tastborstenträger (88) vorgesehen sind.

17. Bürstenkopf nach einem der Ansprüche 1 bis 16, dadurch gekennzeichnet, daß die Meßsignale der Drehmomentaufnehmer (68) über einen Tiefpaßfilter mit einer Grenzfrequenz von 1,5 bis 3 Hz einer Auswerteelektronik zugeleitet werden.

18. Bürstenkopf nach einem der Ansprüche 1 bis 17, dadurch gekennzeichnet, daß das Multigelenk drei gegebenenfalls senkrecht zueinander ausrichtbare Drehachsen (33, 34, 35) zur Orientierung der Waschbürste (46) relativ zu einer geometrisch definierten zu reinigenden Oberfläche sowie eine Teleskopachse (38) und eine weitere Drehachse (36) zur geregelten Führung der Waschbürste (46) in konstantem Abstand entlang der zu reinigenden Oberfläche nach Maßgabe der von den Drehmomentaufnehmern (68, 70) abgegebenen Meßsignale aufweist.

## Claims

1. A brush head for large manipulators, having a carrier (40), which can be coupled to an extension arm and/or multiple joint (16) of the large manipulator, having a brush roller, which is disposed on the carrier (40) on a brush shaft (56) which said brush shaft is motor-driven in a predefined direction of rotation, includes centrifugally supported, flexurally limp bristles (66), acts with its bristles against a surface to be cleaned and is divided up into at least two axially mutually separated roller sections (58), and having, in each case, at least one torque pickup (68, 70) disposed between the brush shaft (56) and the individual roller sections (58), wherein the brush shaft is divided up into a number of shaft sections (56) corresponding to the number of roller sections (58), characterized in that the mutually assigned, mutually concentric roller and shaft sections (58, 56) are interconnected by radial spacers (60), which are arranged spaced apart about the periphery, are rigid in the axial and radial directions and are yielding in the peripheral direction, wherein the torque pickups include a weighing cell (68) which protrudes radially over the respective shaft section (56) in the direction of the roller section (58), and a tensioning member (70) which extends essentially tangentially, counter to the direction of rotation, between the weighing cell (68) and the inner side of the associated roller section (58), and wherein the brush sections (48', 48'', 48''', 48^{IV}), which are formed from a shaft section (56) and roller section (58), in creating the brush roller, are axially braced one against the other in the region of the shaft sections (56) and are connected to the motor drive (44) located on the carrier side.

2. The brush head as claimed in claim 1, characterized in that in the brush sections (56, 58) there are respectively disposed two mutually diametrically opposed weighing cells (68).

3. The brush head as claimed in claim 1 or 2, characterized in that the tensioning members (70) acting upon the weighing cells (68) are flexurally limp.

4. The brush head as claimed in one of claims 1 to 3, characterized in that the weighing cells (68) contain a wire strain gauge.

5. The brush head as claimed in one of claims 1 to 4, characterized in that the shaft sections (56) and the roller sections (58) include radially mutually facing, axially aligned web bars (62) for fastening the spacers (60) that are formed of flat material, especially sheet metal.

6. The brush head as claimed in one of claims 1 to 5, characterized in that each weighing cell (68) is assigned a signal transducer (72), which is preferably disposed inside the shaft section (56) of hollow design and is connected to an external electronic evaluation unit.

7. The brush head as claimed in one of claims 1 to 6, characterized in that the brush sections (56, 58) are interconnected by a drawbar (50) passing through the shaft section (56) of hollow design and are connected to the motor drive (44, 54) located on the carrier side.

8. The brush head as claimed in claim 7, characterized in that the shaft section (56) located on the motor side is mounted on one side in a pivot bearing (42) located on the carrier side and wherein the drawbar (50) is connected, preferably by a Cardan shaft (52), to the motor drive (44, 54).

9. The brush head as claimed in claim 8, characterized in that on the Cardan shaft (52) there is disposed a slip ring (74) for the measuring lines leading to the signal transducers (72).

10. The brush head as claimed in one of claims 1 to 9, characterized in that all signal transducers (72) are disposed on a supporting structure which passes through the shaft sections (56) of hollow design and is detachably fastened there and is preferably configured as a tube enclosing the drawbar (50).

11. The brush head as claimed in one of claims 1 to 10, characterized in that the shaft sections (56) are interconnected, such that they can be reciprocally twisted in the peripheral direction, by axial intermediate rings (76).

12. The brush head as claimed in one of claims 1 to 11, characterized by fluid lines (78) for washing fluid, which are guided along the shaft sections (56) and from which spray lines directed radially to the roller sections (58) are branched off and which are interconnected between the shaft sections (56) by flexible hose pieces (80).

13. The brush head as claimed in one of claims 1 to 12, characterized in that at least three, preferably four brush sections (48', 48'', 48''', 48^{IV}), which are interconnected in the region of the shaft sections (56), are provided.

14. The brush head as claimed in one of claims 1 to 13, characterized in that the roller sections (58) respectively include at least one contact sensor (86, 88), disposed in a recessed arrangement within their brush crown (66), for triggering an emergency off-signal.

15. The brush head as claimed in claim 14, characterized in that the contact sensor exhibits a sensing bristle carrier (88), which is disposed in a radial guide (90) in the region of the roller sections (58) and is fitted with a tuft of rigidly elastic sensing bristles, and a switching member, which can be actuated by a radial motion of the sensing bristle carrier (88), the sensing bristles being shorter than, preferably about half as long as the flexurally limp bristles of the brush crown (66).

16. The brush head as claimed in claim 15, characterized in that at least three, preferably four sensing bristle carriers (88) are respectively provided, which are arranged spaced apart about the periphery, are formed in segment-like configuration and combine to form a ring (86).

17. The brush head as claimed in one of claims 1 to 16, characterized in that the measuring signals of the torque pickups (68) are fed, via a low-pass filter having a limit frequency of 1.5 to 3 Hz, to an electronic evaluation unit.

18. The brush head as claimed in one of claims 1 to 17, characterized in that the multiple joint exhibits three pivot axes (33, 34, 35), which can be aligned, where appropriate, perpendicular to one another, for the orientation of the washing brush (46) relatively to a geometrically defined surface to be cleaned, and a telescopic axle (38) and a further pivot axle (36) for the regulated guidance of the washing brush (46) at a constant clearance along the surface to be cleaned on the basis of the measuring signals emitted by the torque pickups (68, 70).

## Revendications

1. Tête porte-brosse pour manipulateur de grande capacité, comprenant un support (40) couplé avec un cantilever et/ou une articulation multiple (16) du manipulateur de grande capacité, une brosse cylindrique montée sur le support (40) sur un arbre de brosse (56) motorisé entraîné dans un sens de rotation prédéterminé, présentant des poils (66) souples portés par la force centrifuge, agissant avec lesdits poils sur une surface à nettoyer, et divisée en au moins deux sections de cylindre (58) séparées l'une de l'autre dans le sens axial, et respectivement au moins un capteur de couple de rotation (68, 70) disposé entre l'arbre de brosse (56) et les différentes sections de cylindre (58), l'arbre de brosse étant subdivisé en un nombre de sections d'arbre (56) correspondant au nombre de sections de cylindre (58), les sections de brosse (48', 48'', 38''', 38^{IV}) constituées par la section d'arbre (56) et la section de cylindre (58) étant bloquées axialement les unes par rapport aux autres dans la région des sections d'arbre (56) et couplées avec le moteur d'entraînement (44) situé du côté support, et les capteurs de couple de rotation comportant une cellule de balance (68) dépassant radialement de la section d'arbre (56) respective en direction de la section de cylindre (58),
**caractérisée en ce** que les sections de cylindre et d'arbre (58, 56) associées et montées concentriquement l'une par rapport à l'autre sont réunies par des écarteurs radiaux (60) répartis sur la périphérie, rigides dans les directions axiale et radiale et souples dans la direction circonférentielle, et que les capteurs de couple de rotation sont équipés d'un organe de traction (70) qui s'étend entre la cellule de balance (68) et la face intérieure de la section de cylindre (58) associée, sensiblement tangentiellement dans le sens opposé à la direction de rotation.

2. Tête porte-brosse selon la revendication 1, caractérisée en ce que dans les sections de brosse (56, 58) sont disposées à chaque fois deux cellules de balance (68) diamétralement opposées.

3. Tête porte-brosse selon la revendication 1 ou 2, caractérisée en ce que les organes de traction (70) agissant sur les cellules de balance (68) sont souples.

4. Tête porte-brosse selon l'une des revendications 1 à 3, caractérisée en ce que les cellules de balance (68) contiennent une jauge extensométrique.

5. Tête porte-brosse selon l'une des revendications 1 à 4, caractérisée en ce que les sections d'arbre (56) et les sections de cylindre (58) comportent des barrettes (62) tournées radialement les unes vers les autres et orientées dans le sens axial pour la fixation des écarteurs (60) réalisés en un matériau plat, en particulier en tôle métallique.

6. Tête porte-brosse selon l'une des revendications 1 à 5, caractérisée en ce qu'à chaque cellule de balance (68) est associé un convertisseur de signaux (72) disposé de préférence à l'intérieur de la section d'arbre (56) creuse et relié à une électronique d'interprétation externe.

7. Tête porte-brosse selon l'une des revendications 1 à 6, caractérisée en ce que les sections de brosse (56, 58) sont réunies par une barre de traction (50) traversant la section d'arbre (56) creuse et couplées avec le moteur d'entraînement (44, 54) monté du côté support.

8. Tête porte-brosse selon la revendication 7, caractérisée en ce que la section d'arbre (56) située du côté moteur est montée unilatéralement dans un palier tournant (42) du côté support, et que la barre de traction (50) est rattachée au moteur d'entraînement (44, 54), de préférence par l'intermédiaire d'un arbre cardan (52).

9. Tête porte-brosse selon la revendication 8, caractérisée en ce que l'arbre cardan (52) porte une bague collectrice (74) pour les lignes de mesure menant aux convertisseurs de signaux (72).

10. Tête porte-brosse selon l'une des revendications 1 à 9, caractérisée en ce que tous les convertisseurs de signaux (72) sont disposés sur une structure porteuse traversant les sections d'arbre (56) creuses et fixée sur celles-ci de manière amovible, laquelle est conformée de préférence en tube entourant la barre de traction (50).

11. Tête porte-brosse selon l'une des revendications 1 à 10, caractérisée en ce que les sections d'arbre (56) sont couplées les unes avec les autres par des bagues intermédiaires (76) de façon à pouvoir tourner les unes par rapport aux autres dans le sens circonférentiel.

12. Tête porte-brosse selon l'une des revendications 1 à 11, caractérisée en ce qu'elle comprend des conduites de liquide (78) pour le liquide de lavage amenées le long des sections d'arbre (56), desquelles partent des conduites de pulvérisation qui sont dirigées radialement vers les sections de cylindre (58) et reliées entre elles entre les sections d'arbre (56) par des sections de tuyau flexible (80).

13. Tête porte-brosse selon l'une des revendications 1 à 12, caractérisée en ce qu'elle comprend au moins trois, de préférence quatre sections de brosse (48', 48'', 48''', 48^{IV}) rattachées entre elles dans la région des sections d'arbre (56).

14. Tête porte-brosse selon l'une des revendications 1 à 13, caractérisée en ce que les sections de cylindre (58) comportent à chaque fois au moins un détecteur de proximité (86, 88) pour le déclenchement d'un signal d'arrêt d'urgence disposé en retrait dans leur couronne de poils (66).

15. Tête porte-brosse selon la revendication 14, caractérisée en ce que le détecteur de proximité comprend un support de poils de contact (88) disposé dans un guidage radial (90) dans la région des sections de cylindre (58) et muni d'un faisceau de poils de contact rigides et élastiques, et un organe de commutation qui peut être actionné par un mouvement radial du support de poils de contact (88), les poils de contact étant plus courts, de préférence de moitié environ plus courts que les poils souples de la couronne de poils (66).

16. Tête porte-brosse selon la revendication 15, caractérisée en ce qu'il est prévu à chaque fois trois, de préférence quatre supports de poils de contact (88) en forme de segments répartis sur la périphérie et se complétant en un anneau (86).

17. Tête porte-brosse selon l'une des revendications 1 à 16, caractérisée en ce que les signaux de mesure des capteurs de couple de rotation (68) sont transmis à une électronique d'interprétation par l'intermédiaire d'un filtre passe-bas avec une fréquence limite de 1,5 à 3 Hz.

18. Tête porte-brosse selon l'une des revendications 1 à 17, caractérisée en ce que l'articulation multiple comprend trois axes de rotation (33, 34, 35) éventuellement orientables perpendiculairement les uns par rapport aux autres pour l'orientation de la brosse de lavage (46) par rapport à une surface à nettoyer géométriquement définie, ainsi qu'un axe télescopique (38) et un axe de rotation (36) supplémentaire pour le guidage réglé de la brosse de lavage (46) à une distance constante le long de la surface à nettoyer, en fonction des signaux de mesure délivrés par les capteurs de couple de rotation (68, 70).
